# EUROPEAN PATENT APPLICATION

(11) **EP 1 085 449 A1**
(43) Date of publication of application: **21.03.2001**
(21) Application number: 99907941.1
(22) Date of filing: 16.03.1999
(51) Int. Cl.: G06F 19/00

(54) **REMITTING SYSTEM AND METHOD**

(30) Priority: 16.03.1998 JP 6567798
(71) Applicant: FUJITSU LIMITED, Kawasaki-shi, Kanagawa 211-8588 (JP); The Sakura Bank, Ltd., Chiyoda-ku, Tokyo 100-8611 (JP)
(72) Inventor: MORI, Nobuyuki, Fujitsu Limited, Kawasaki-shi, Kanagawa 211-8588 (JP); HIROTA, Takaaki, The Sakura Bank, Limited, Tokyo 100-8611 (JP)
(74) Representative: Stebbing, Timothy Charles
(86) International application number: JP9901264
(87) International publication number: WO9948035

(57) **Abstract**

When a remitter makes a remittance to a recipient who has no account, general information of a remittee, personal information that only the remittee knows, and confidential information that the remitter unilaterally designates are specified. A remittance system in a financial institution automatically generates a temporary remittance account based on the contents of a remittance, and clears the temporary remittance account after a remittee withdraws the remittance with a proper procedure.

## Description

### Technical Field

The present invention relates to a remittance system for making a remittance to a remittee who has no account by using a terminal such as an ATM (Automatic Teller Machine) of a financial institution, a home banking terminal, a firm banking terminal, etc., and a method thereof.

### Background Art

In a fund settlement with a transfer service provided by a financial institution such as a conventional bank, etc., a fund is transferred to a financial institution where a remittee has an account. Accordingly, the remittee cannot receive a transferred fund unless he or she has an account in any bank. In the meantime, a remitter cannot make a fund settlement if he or she does not make a transfer to the bank where the remittee has an account. Also in a remittance service, a remittance cannot be made if a remittee account does not exist in a bank at a remittance destination. Therefore, the remittee must take the trouble to open an account so as to receive a particular remittance. At this time, when a request is issued to make a remittance from a bank that is different from the one where a remittee account exists, a higher fee must be paid than in the case where the remittance is requested from a branch office of the bank where the remittee account exists, as is always the case.

### Disclosure of Invention

An object of the present invention is to provide a remittance system which can make a remittance to a remittee who has no account, in order to improve the convenience of a remittance/transfer service provided by a financial institution, and a method thereof.

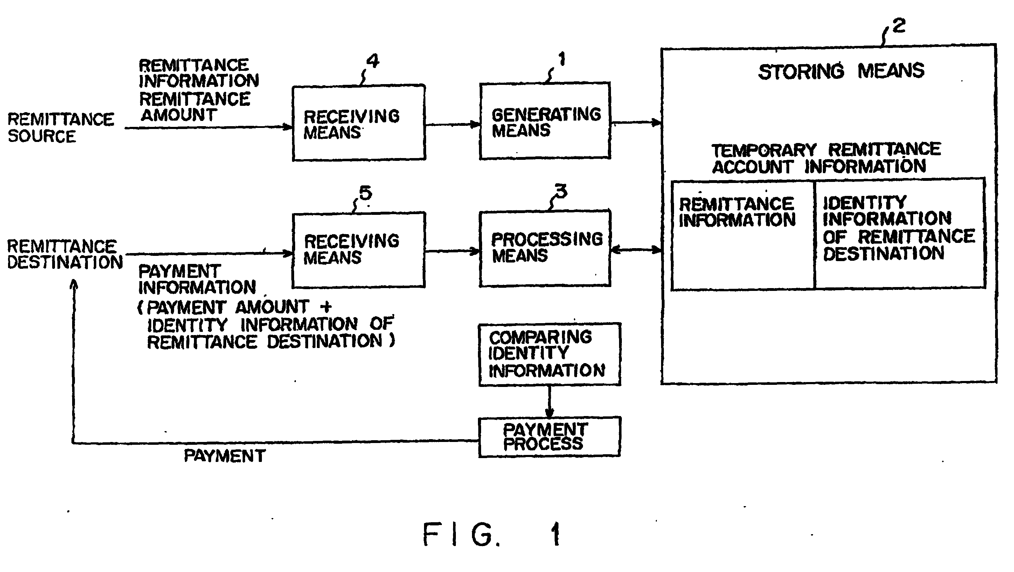

Fig. 1 is a block diagram showing the principle of a remittance system according to the present invention. Fig. 1 includes the first, second, end third principles of the present invention.

A remittance system according to the first principle of the present invention is a system which transfers money information by using a financial institution managing an account having the money information. This system comprises a generating means 1, a storing means 2, and a processing means 3.

The generating means 1 generates temporary remittance account information that includes remittance information and identity information identifying a remittance destination, when the remittance information including a remittance amount is specified by a remittance source. The storing means 2 stores the temporary remittance account information. The processing means 3 reads the identity information from the storing means 2, makes a comparison between the read information and identity information specified by the remittance destination, and performs a payment process for paying money to the remittance destination based on a result of the comparison.

The remittance source specifies a remittance amount, and makes a remittance to a remittance destination with a method such as payment from an account, a cash transfer, etc. If the remittance destination does not have an account for receiving a remittance, the generating means 1 automatically generates a temporary remittance account, and stores its information in the storing means 2. In the storing means 2, the remittance information including a remittance amount end the identity information of the remittance destination are corresponded and stored. The identity information is personal information of a remittance destination, which cannot be easily learned by a third party, and is managed as an access key to a temporary remittance account. The identity information is specified, for example, by a remittance source along with remittance information.

When a remittance destination presents its identity information and requests a payment, the processing means 3 reads the identity information of the temporary remittance account information, and makes a comparison between the read information and the identity information presented by the remittance destination. If they match as a result of the comparison, the processing means 3 determines that the person who requested the payment is a proper remittance destination, and makes a payment to that person.

As described above, with the remittance system which temporarily generates a remittance account at the time of a remittance, confirms identity based on the identity information of the remittance destination, which is set in the remittance account, and pays remitted money, a remittance can easily be made also to a remittee who has no account. Additionally, a remittance destination can easily receive a remittance only by presenting its identity information.

A financial processing device according to the second principle of the present invention, which is arranged in a financial institution, comprises a receiving means 4, a generating means 1, and a storing means 2.

The receiving means 4 receives remittance information including a remittance amount. The generating means 1 generates temporary remittance account information that includes the remittance information and identity information identifying a remittance destination. The storing means 2 stores the generated temporary remittance account information so that money within the remittance amount can be paid in response to a request from the remittance destination.

A remittance source transmits remittance information by using a terminal such as an ATM, a personal computer, etc. The receiving means 4 receives the remittence information directly from the terminal or indirectly via another financial processing device. The generating means 1 automatically generates a temporary remittance account, and stores the remittance information including the remittance amount and the identity information of the remittance destination as the information of the generated temporary remittance account by making a correspondence between them. As a result, money within the remittance amount can be paid in response to a payment request from the remittance destination presenting its identity information.

As described above, with the financial processing device which temporarily generates a remittance account at the time of remittance, sets identity information of a remittance destination, and manages remitted money, a remittance can easily be made also to a remittee who has no account.

A financial processing device according to the third principle of the present invention, which is arranged in a financial institution, comprises a storing means 2, a receiving means 5, and a processing means 3.

The storing means 2 stores temporary remittance account information that includes balance information of remitted money and identity information identifying a remittance destination, and is generated at the time of a remittance. The receiving means 5 receives payment information that includes a payment amount from a remittance account, which corresponds to the temporary remittance account information, end the identity information specified by the remittance destination. The processing means 3 reads the identity information from the storing means 2, makes a comparison between the reed information and the identity information specified by the remittance destination, and performs a payment process for paying money corresponding to the payment amount to the remittance destination based on a result of the comparison.

The remittance destination transmits the payment information with a terminal such as an ATM, a personal computer, etc. The receiving means 5 receives the payment information directly from the terminal or indirectly via another financial processing device. The processing means 3 reads the identity information within the temporary remittance account information, and makes a comparison between the read information and the identity information included in the payment information. If they match as a result of the comparison, the processing means 3 determines that the person that transmits the payment information is a proper remittance destination and makes a payment to that person.

As described above, with the financial processing device which confirms identity based on the identity information of the remittance destination, which is sat in a temporary remittance account, and pays remitted money, a remittance can easily be made also to a remittee who has no account.

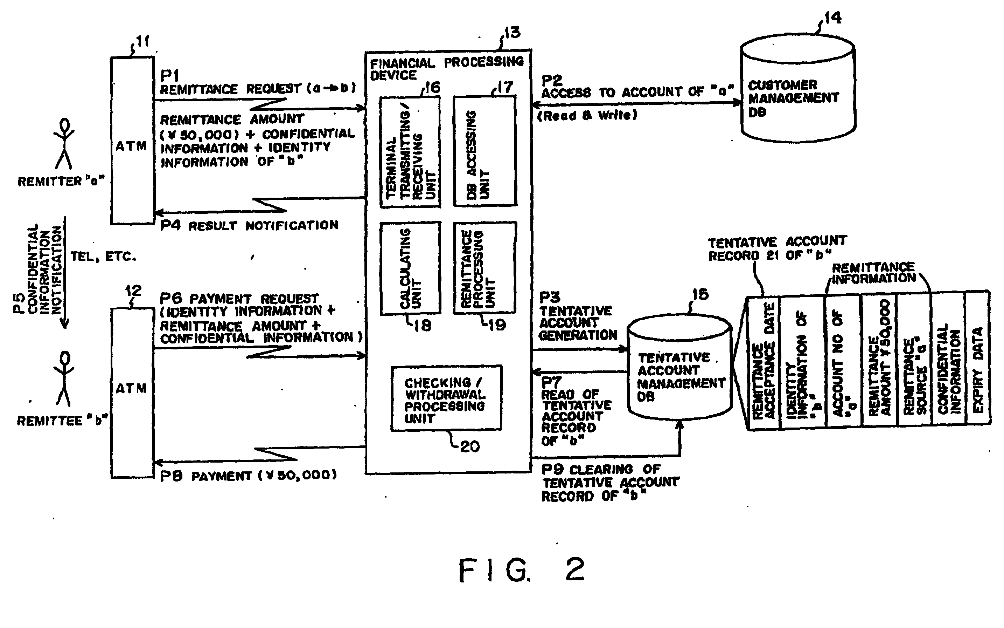

For example, the generating means 1 shown in Fig. 1 corresponds to a calculating unit 18 which is shown in Fig. 2 and will be described later. The storing means 2 corresponds to a customer management database 14 or a tentative account management database 15, which is shown in Fig. 2. The processing means 3 corresponds to the calculating unit 18 shown in Fig. 2. The receiving means 4 or 5 corresponds to a terminal transmitting/receiving unit 16 shown in Fig 2.

### Brief Description of Drawings

Fig. 1 is a block diagram showing the principles of a remittance system according to the present invention;
Fig. 2 shows a remittance system using a tentative account;
Fig. 3 shows a remittance system using a related record;
Fig. 4 shows a remittance without an account in a correspondence;
Fig. 5 shows temporary remittance account types;
Fig. 6 is a flowchart showing a remittance process (No. 1);
Fig. 7 is a flowchart showing the remittance process (No. 2);
Fig. 8 shows an initial screen;
Fig. 9 shows the screen for inputting the contents of a remittance;
Fig. 10 shows the exchange of electronic messages in the remittance process;
Fig. 11 is a flowchart showing a withdrawal process;
Fig. 12 shows the screen for confirming a remittee;
Fig. 13 shows the exchange of electronic messages in the withdrawal process;
Fig. 14 is a flowchart showing a first process performed by a financial processing device (No. 1);
Fig. 15 is a flowchart showing the first process performed by the financial processing device (No. 2);
Fig. 16 is a flowchart showing a second process performed by the financial processing device;
Fig. 17 is a flowchart showing a first process performed by a terminal (No. 1);
Fig. 18 is a flowchart showing the first process performed by the terminal (No. 2);
Fig. 19 is a flowchart showing the first process performed by the terminal (No. 3);
Fig. 20 is a flowchart showing the first process performed by the terminal (No. 4);
Fig. 21 is a flowchart showing the process for specifying confidential information;
Fig. 22 is a flowchart showing a second process performed by the terminal;
Fig. 23 is a flowchart showing a third process performed by the terminal;
Fig. 24 is a block diagram showing the configuration of an information processing device; and
Fig. 25 shows storage media.

### Best Mode for Carrying Out the Invention

Hereinafter, a preferred embodiment according to the present invention is described in detail by referring to the drawings.

According to the present invention, when a remitter makes a remittance to a remittee who has no account, general information of the remittee, personal information that only the remittee himself knows, and confidential information that the remitter unilaterally designates are specified. A remittance system for use in a financial institution automatically generates a temporary remittance account based on the contents of a remittance, and clears the temporary remittance account after a remittee withdraws remitted money with a proper procedure. By introducing such a temporary remittance account, a remittance can easily be made also to a remittee who has no account.

A remittance method according to the present invention is a remittance method which accompanies no account transfer to a remittee who has no account. Viewing from a remittee side, this is a method withdrawing cash without using an account for receiving a remittance and a cash card. A temporary remittance account is generated as a tentative account record of a remittee, which is managed by a financial institution, or as a related record of a remitter account.

Fig. 2 shows a remittance system using a tentative account record.

A remittance system shown in Fig. 2 comprises ATMs 11 and 12, a financial processing device 13, a customer management database (DB) 14, and a tentative account management database 15. The financial processing device 13 is computerized, and includes a terminal transmitting/receiving unit 16, a database accessing unit 17, a calculating unit 18, a remittance processing unit 19, and a checking/withdrawal processing unit 20.

The ATMs 11 and 12 may be those of the same financial institution or of different financial institutions. Desirably, the financial processing device 13 is arranged in a financial institution to which the ATM 11 or 12 belongs.

First of all, a remitter "a" requests the financial processing device 13 to make a remittance to a remittee "b" from the ATM 11 (procedural step P1). At this time, the terminal transmitting/receiving unit 16 receives the remittance amount (for example, 50,000 yen) input from the ATM 11, confidential information, and the identity information of the remittee "b". The confidential information is, for example, information such as a temporary password, etc. that only the remitter "a" knows. The confidential information may be automatically generated by the financial processing device 13 instead of being designated by the remitter "a".

The identity information of the remittee "b" is personal information such as a name, a birth date, a telephone number, an address, an employment place, etc. Among these information items, the birth date, the telephone number, the address, the employment place, etc. are personal information of the remittee "b". The identity formation is used to confirm the identity of the remittee "b" when he or she withdraws remitted money.

Next, the database accessing unit 17 accesses the account record of the remitter "a" within the customer management database 14, and reduces its balance by the remittance amount (procedural step P2). For example, if the balance is 250,000 yen and the remittance amount is 50,000 yen, the balance after being updated is 200,000 yen. A balance update is performed by the calculating unit 18.

Then, the remittance processing unit 19 generates a tentative account record 21 of the remittee "b", and stores the generated record in the tentative account management database 15 via the database accessing unit 17 (procedural step P3). The tentative account record 21 includes a remittance acceptance date and time, the identity information of the remittee "b", the account number of the remitter "a", a remittance amount, remittance source information such as the name of the remitter "a", confidential information, and a time limit. Among these information items, the account number of the remitter "a", the remittance amount, and the remittance source information are used as the remittance information. If money remitted to a tentative account is not withdrawn before the time limit, the remitted money is returned to the remittance source, and the tentative account record 21 is cleared.

Then, the result of the process is notified from the terminal transmitting/receiving unit 16 to the remitter "a" (procedural step P4), end the remittance procedure is completed. The remitter "a" notifies the remittee "b" of the contents of the remittance with a method such as a telephone, etc., and also notifies the confidential information required for a withdrawal (procedural step P5). If the confidential information is automatically generated, the generated information is notified from the financial processing device 13 to the remitter "b" directly or via the remitter "a".

The remitter "b" requests the financial processing device 13 to pay money corresponding to the remittance amount, from the ATM 12 (procedural step P6). At this time, the terminal transmitting/receiving unit 16 receives the remittance amount, the confidential information, and the identity information of the remittee "b", which are input from the ATM 12. Next, the checking/withdrawal processing unit 20 reads the tentative account record 21 from the tentative account management database 15 (procedural step P7), makes a comparison between the read information and the information input by the remittee "b", and confirms the identity of the remittee "b".

When the identity of the remittee "b" is confirmed, the checking/withdrawal processing unit 20 instructs the ATM 12 to dispense cash by the remittance amount (procedural step P8), and clears the tentative account record 21 (procedural step P9). By confirming identity with the identity information of the remittee "b" and the confidential information, the remittee "b" can receive a payment from the tentative account without using a cash card.

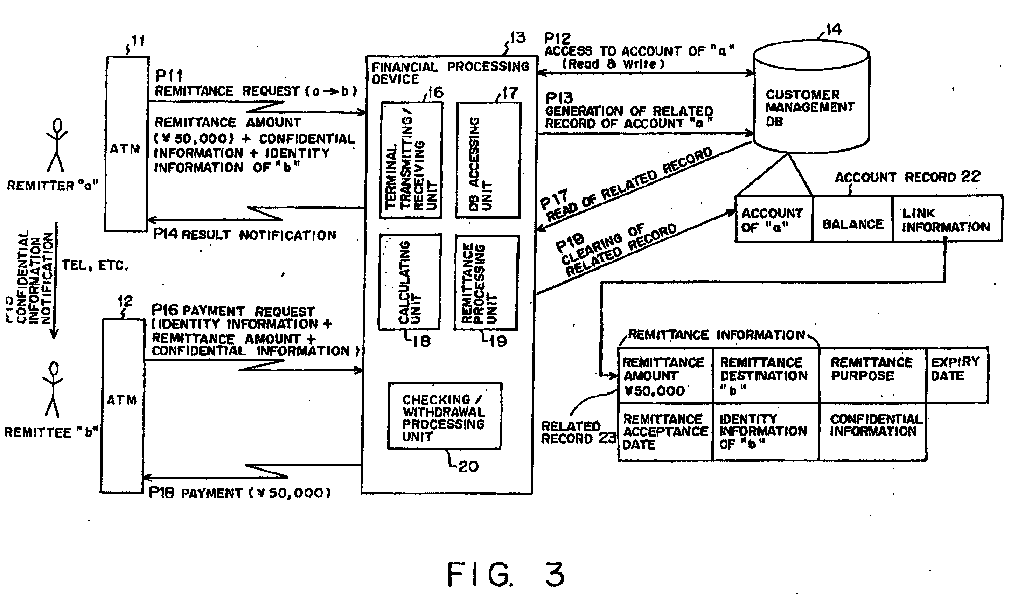

Fig. 3 shows a remittance system using a related record. The configuration of the remittance system shown in Fig. 3 is similar to that of the remittance system shown in Fig. 2 except for a tentative management database 15.

First of all, a remitter "a" requests the financial processing device 13 to make a remittance to a remittee "b" from the ATM 11 (procedural step P11). At this time, the terminal transmitting/receiving unit 16 receives a remittance amount, confidential information, and the identity information of the remittee "b", which are input from the ATM 11.

Next, the database accessing unit 17 accesses an account record 22 of the remitter "a" within the customer management database 14, and reduces its balance by the remittance amount (procedural step S12). Additionally, the remittance processing unit 19 generates a related record 23 of the account record 22, and stores the generated record in the customer management database 14 via the database accessing unit 17 (procedural step P13).

The related record 23 includes the remittance amount, the remittance destination information such as the name of the remittee "b", etc., a remittance purpose, a time limit, a remittance acceptance data end time, the identity information of the remittee "b", and the confidential information. Among these information items, the remittance amount, the remittance destination information, and the remittance purpose are used as the remittance information. Additionally, link information such as a pointer pointing to the address of the related record 23, etc. is added to the account record 22. If the remitted money is not withdrawn from the related record 23 before the time limit, the money is returned to the account record 22 of the remittance source, and the related record 23 is cleared.

Next, the result of the process is notified from the terminal transmitting/receiving unit 16 to the remitter "a" (procedural step P14), and the remittance procedure is completed. The remitter "a" notifies the remittee "b" of the contents of the remittance with a method such as a telephone, etc., and also notifies the confidential information required for a withdrawal (procedural step P15).

The remittee "b" requests the financial processing device 13 to pay the money remitted from the remitter "a" from the ATM 12 (procedural step P16). At this time, the terminal transmitting/receiving unit 16 receives the remittance amount, the confidential information, and the identity information of the remittee "b", which are input from the ATM 12. Then, the checking/withdrawal processing unit 20 reads the related record 23 from the customer management database 14 (procedural step P17), makes a comparison between the read information and the information input by the remittee "b", and confirms the identity of the remittee "b".

When the identity of the remittee "b" is confirmed, the checking/withdrawal processing unit 20 instructs the ATM 12 to dispense cash by the remittance amount (procedural step P18), and clears the related record 23 (procedural step P19). In this way, the remittee "b" can withdraw the remitted money without using a cash card in a similar manner as in a remittance using a tentative account.

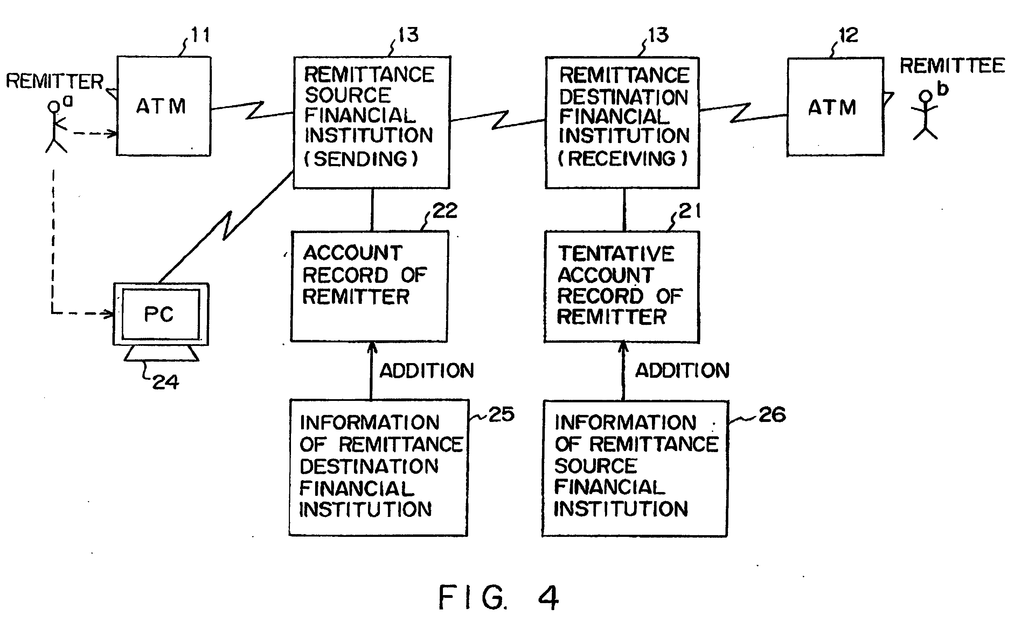

In the meantime, if a financial institution of a remittance source is different from that of a remittance destination at the time of a remittance using a tentative account, a tentative account record 21 is generated in the tentative account management database 15 of the financial institution of the remittance destination based on a contract for a correspondence between the financial institutions, as shown in Fig. 4. In this case, the financial institution of the remittance source is called a sending financial institution, whereas that of the remittance destination is called a receiving financial institution.

Additionally, when the tentative account record 21 is generated, remittance source financial institution information 26 representing the name or the identification code of the remittance source financial institution is added, and remittance destination financial institution information 25 is added to the account record 22 of the remitter "a" within the customer management database 14 of the remittance source financial institution. These information are used when an inquiry is made from the remitter "a" or a tentative account is cleared.

In the systems shown in Figs. 2 and 3, the remitter "a" performs remittance operations from the ATM 11. However, the remittance operations may be performed from a PC (Personal Computer) 24 as shown in Fig. 4. Normally, remittance operations may be performed by using an arbitrary information processing terminal connected to the financial processing device 13 via a line. In the explanation provided below, a device that a remitter or a remittee operates is referred to simply as a terminal.

Comparing a remittance using a tentative account and that using a related record, the tentative account record 21 is generated in the tentative account management database 15 that is arranged separately from the customer management database 14. Meanwhile, the related record 23 is generated in an existing customer management database 14. Accordingly, the cost required to generate and manage the related record 23 is lower than that required for the tentative account record 21, end it is also possible to set a smaller remittance fee.

However, a related record can be generated only in the same financial institution as that including a remitter account, whereas a tentative account can be generated in a different financial institution. Accordingly, it can be said that the degree of freedom of a remittance using a tentative account is higher.

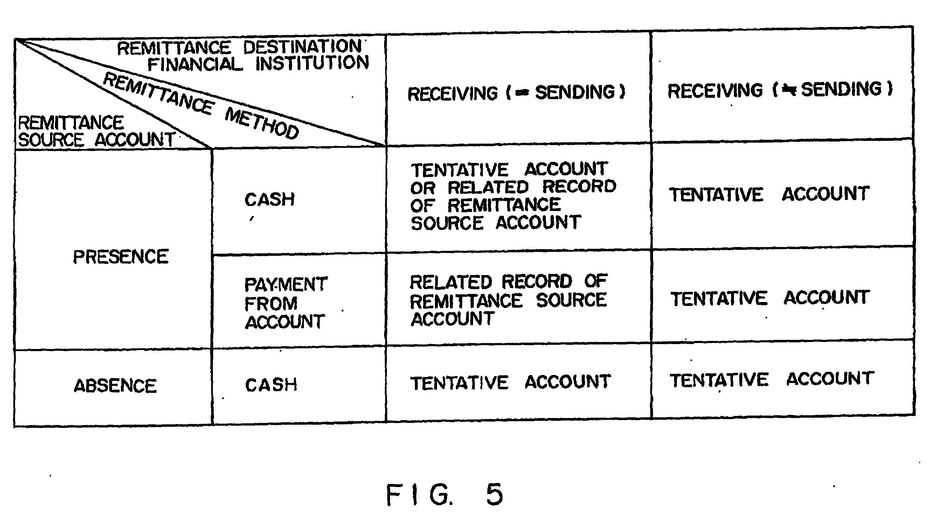

Fig. 5 summarizes temporary remittance account types according to use purposes or fees. If a receiving financial institution different from a sending financial institution is specified as a remittance destination, a remittance using a tentative account is automatically made also as shown in Fig. 4. Additionally, if a remittance destination may be a sending financial institution, the type of a temporary remittance account is determined according to the presence/absence of a remittance source account and a remittance method.

Assuming that a remittance source account exists and a remitter pays in cash, a remittance using a tentative account or a related record is made. If a remittance is made by paying from an account, a remittance using a related record is made. For payment from an account, a remittance can be made by using a tentative account as shown in Fig. 2. However, there is a strong possibility that a related record with a smaller fee is used. Furthermore, a remittance using a tentative account is made if a remittance source account does not exist and a remitter pays in cash.

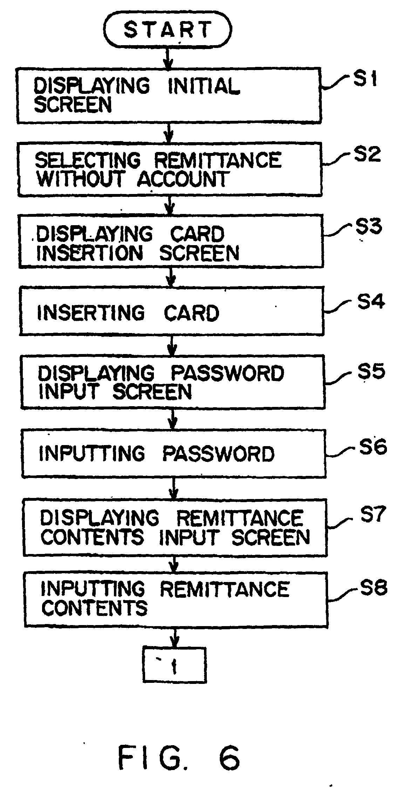

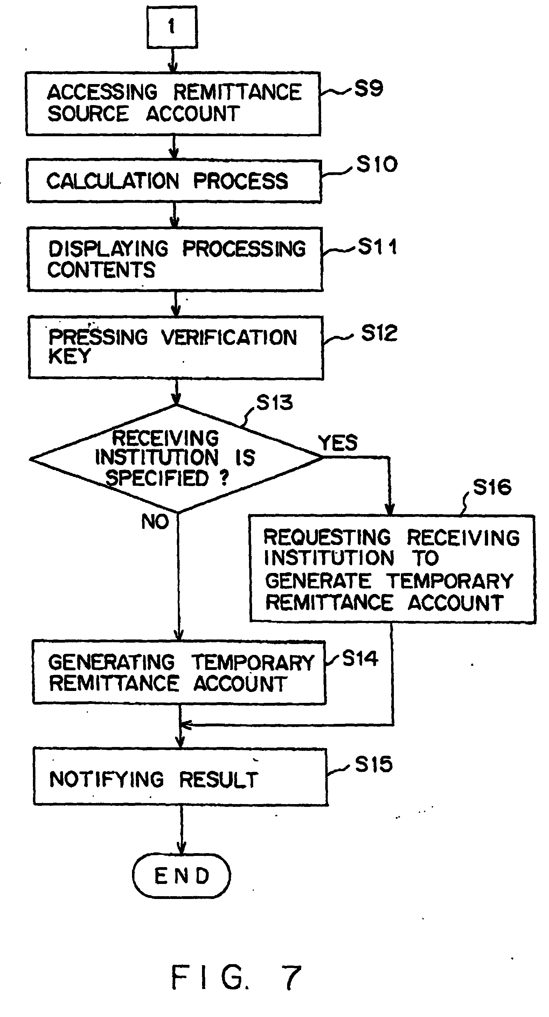

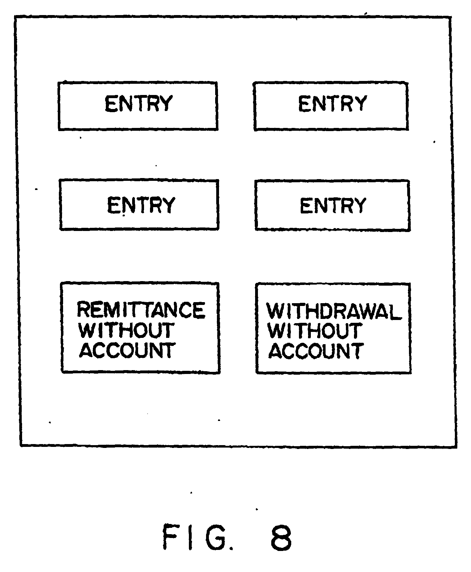

Next, the flow of the remittance process using a temporary remittance account is explained by referring to Figs. 6 through 10. Figs. 6 and 7 are flowcharts showing the remittance process. Once the process is started, an initial screen of a service menu, which is shown in Fig. 8, is made visible on a display of a terminal (step S1 of Fig. 6). This initial screen includes the entries of a remittance without an account and a withdrawal without an account as well as other service entries.

When a remitter selects a remittance without an account (step S2), a cash card insertion screen is displayed (step S3). When the remitter inserts his or her cash card (step S4), a password (or a personal identification number) input screen is displayed (step S5).

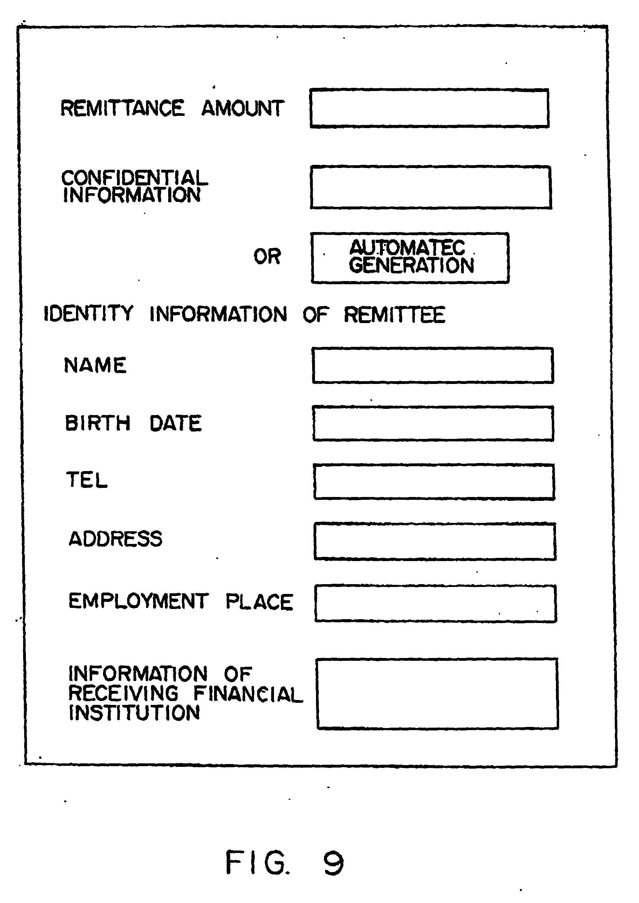

When the remitter inputs his or her password (step S6), a remittance contents input screen shown in Fig. 9 is displayed (step S7). This screen includes the input boxes for a remittance amount, confidential information, identity information of a remittee, and receiving financial institution information, end an entry for specifying automatic generation of confidential information.

When the remitter inputs necessary data (step S8), the financial processing device 13 accesses the remittance source account within the customer management database 14 (step S9 of Fig. 7), performs a calculation process, and obtains the balance after the remittance (step S10). The financial processing device 13 then displays the contents of the process based on the input remittance contents (step S11). When the remitter presses a verification key (step S12), the financial processing device 13 determines whether or not a receiving financial institution has been specified (step S13).

If the financial processing device 13 determines that the receiving financial institution has not been specified, it generates a temporary remittance account (step S14), notifies the remitter of the result of the process (step S15), and terminates the process. If the financial processing device 13 determines that the receiving financial institution has been specified, it requests the financial processing device 13 of the specified financial institution to generate a temporary remittance account (step S16), end performs the operation of step S15.

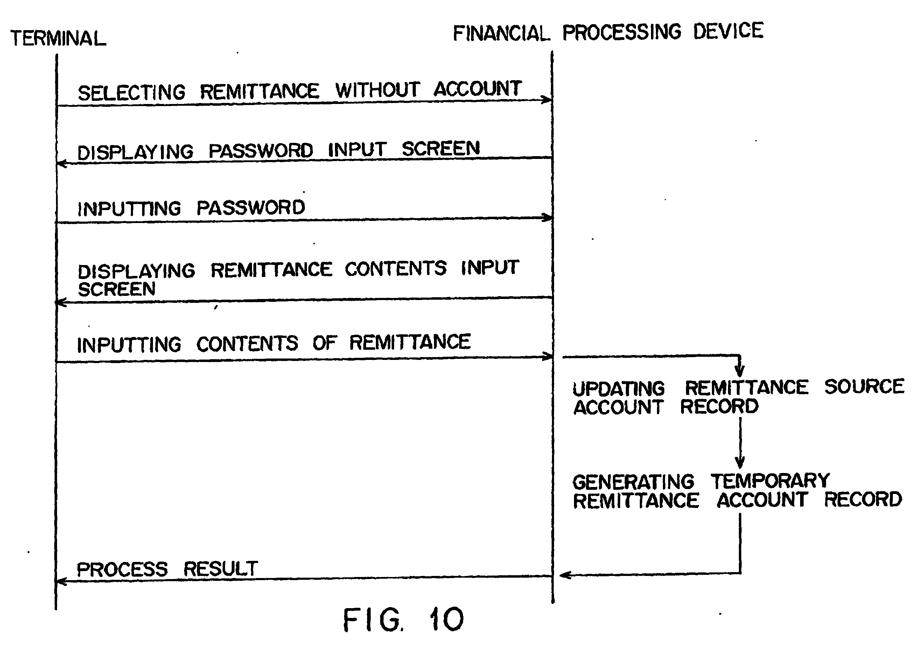

In this remittance process, electronic messages shown in Fig. 10 are exchanged between the terminal and the financial processing device. When an instruction to select a remittance without an account is first issued from the terminal to the financial processing device, an instruction to display the password input screen is returned. When an input password is transmitted to the financial processing device, an instruction to display the remittance contents input screen is returned. When input remittance contents are transmitted to the financial processing device, the financial processing device returns the result of the process after updating the record of the remittance source account, and generating a record of a temporary remittance account.

Here, an update of the record of a remittance source account means the process for updating the balance of a remittance source account, and the process for generating link information pointing to a related record. If the financial processing device automatically generates confidential information, it is possible to notify the remitter of the generated information, for example, by being included in the result of the process.

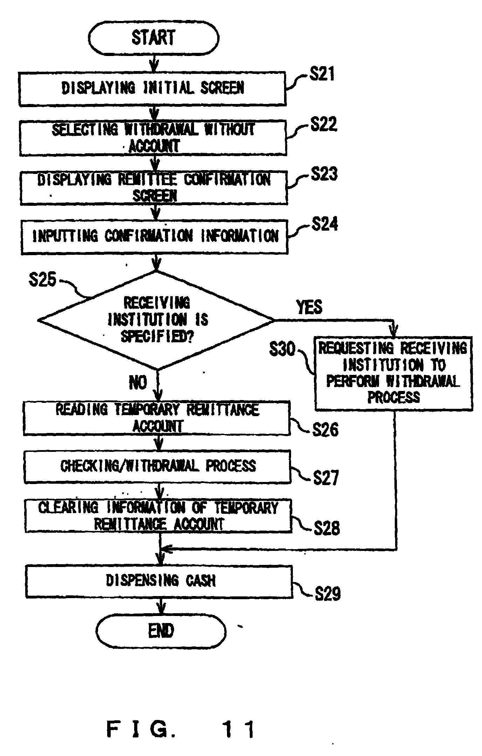

Next, the flow of the withdrawal process from a temporary remittance account is explained by referring to Figs. 11 through 13. Fig. 11 is a flowchart showing the withdrawal process. Once the process is started, an initial screen shown in Fig. 8 is made visible on a display of a terminal (step S21).

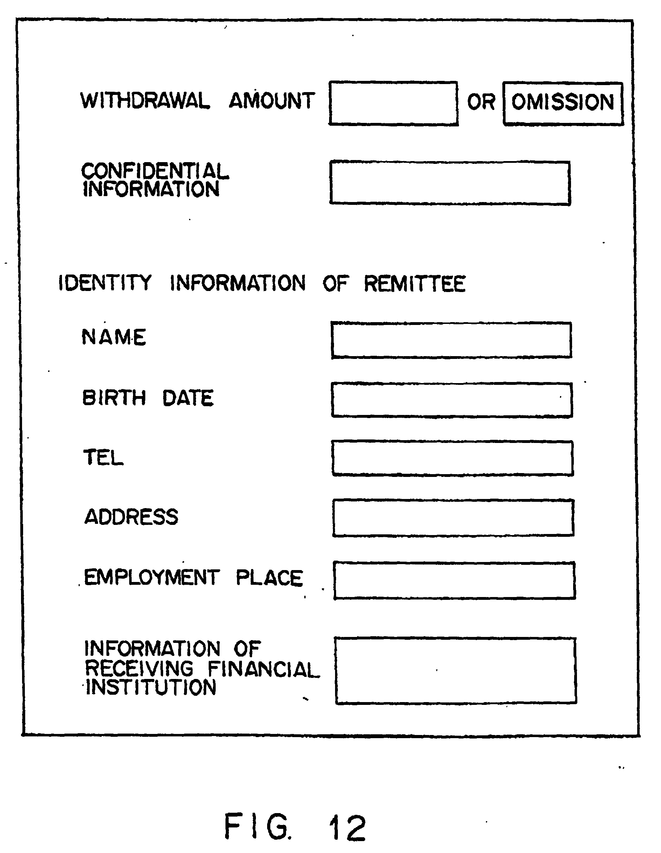

When a remittee selects a withdrawal without an account (step S22), the screen for confirming the identity of the remittee, which is shown in Fig. 12, is displayed (step S23). This screen includes the input boxes for a withdrawal amount and its omission, end besides, the input boxes for confidential information, identity information of a remittee, end receiving financial institution information similar to the remittance contents input screen shown in Fig. 9. When the remittee specifies an omission of a withdrawal amount, the total amount in a temporary remittance account is automatically set as a withdrawal amount.

When the remittee inputs necessary data as confirmation information an the confirmation screen (step S24), the financial processing device 13 determines whether or not a receiving financial institution different from that the financial processing device 13 belongs to has been specified (step S25).

If the financial processing device 13 determines that the receiving financial institution has not been specified, it reads the information of a temporary remittance account (step S26), and performs a checking/withdrawal process (step S27). Here, if all of the information items input by the remittee perfectly match those of the temporary remittance account, the financial processing device 13 determines that the remittee is a proper recipient. Then, the financial processing device 13 clears the information of the temporary remittance account (step S28), instructs the terminal to dispense cash (step S29), and terminates the process. If the financial processing device 13 determines that the different receiving financial institution has been specified, it requests the financial processing device 13 of the specified financial institution to perform the withdrawal process (step S30), and performs the operation of step S29.

If a temporary remittance account is a related record of a remittance source account, the remittee inputs also remittance source information such as the name of a remitter, etc. in step S24. Then, in step S26, the remittance source account is searched based on the information, and its related record is accessed by using the link information of the remittance source account.

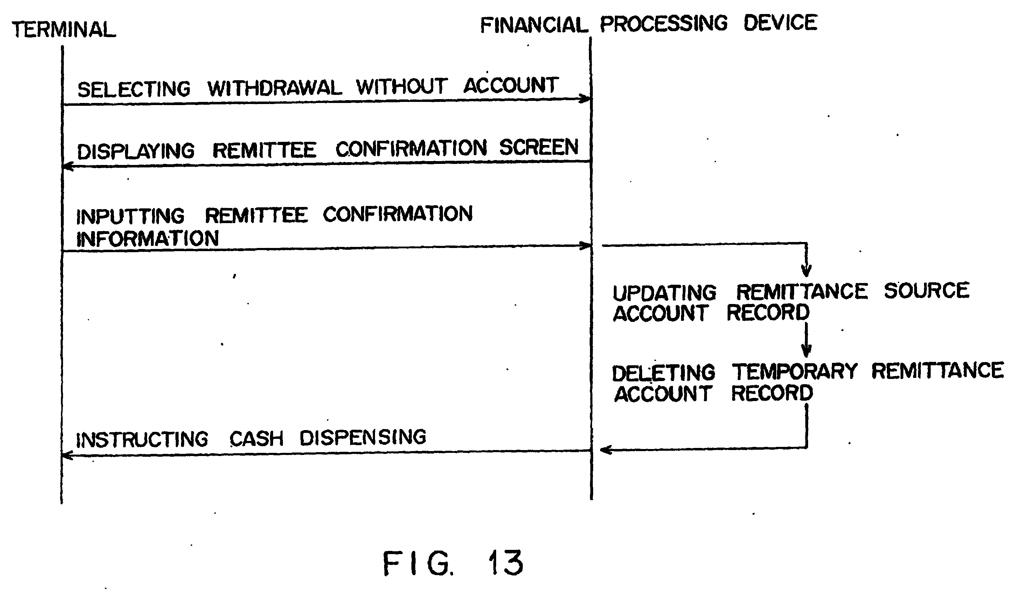

In this withdrawal process, electronic messages shown in Fig. 13 are exchanged between the terminal and the financial processing device. When an instruction to select a withdrawal without an account is transmitted from the terminal to the financial processing device, an instruction to display the remittee confirmation screen is returned. When input confirmation information is transmitted to the financial processing device, the financial processing device returns an instruction to dispense cash after updating the record of the remittance source account, and clearing the record of the temporary remittance account.

Here, an update of the record of a remittance source account means the process for clearing link information pointing to a related record. Deletion of the record of a temporary remittance account means the process for deleting a related record itself or a tentative account record.

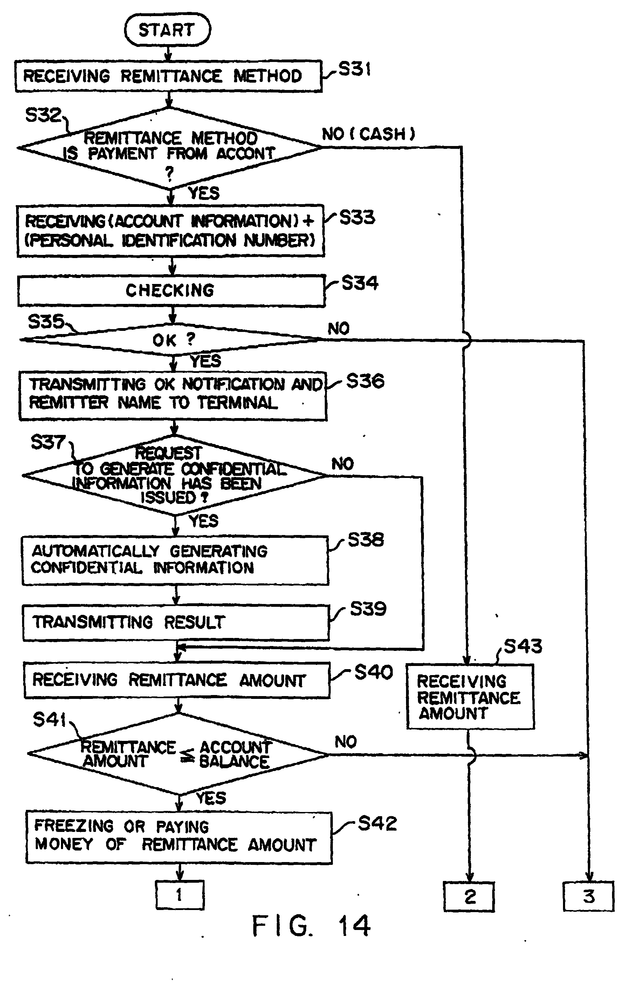

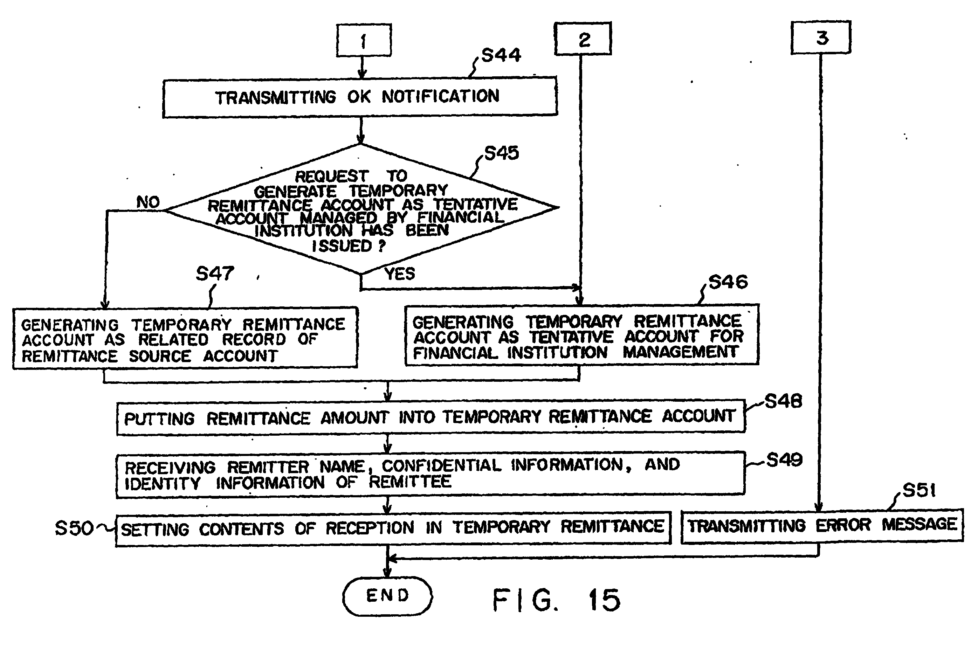

Next, further details of the process performed by the financial processing device are described by referring to Figs. 14 through 16. Figs. 14 and 15 are flowcharts showing the process performed by the financial processing device upon receiving a remittance request from the terminal. Once the process is started, the financial processing device first receives the information specifying a remittance method from the terminal (step S31), and determines whether or not the remittance method is payment from an account (stop S32).

If the remittance method is payment from an account, the financial processing device then receives the account information and the personal identification number of the remittance source from the terminal (step S33), checks them (step S34), and determines whether or not they are proper (step 35). As the account information, for example, a financial institution code, a branch office code, a deposit type code, an account number, etc., are used. If they are determined to be proper, the financial processing device transmits OK notification indicating that the result of the process is OK, and the owner (remitter) name registered to the remittance source account record to the terminal (step S36), and determines whether or not a request to generate confidential information has been issued from the terminal (step S37).

If the financial processing device determines that the request to generate confidential information has been issued, it automatically generates confidential information (step S38), and transmits the generated information to the terminal (step S39). In this case, the confidential information is generated using a random number, etc., with a predetermined algorithm. Then, the financial processing device receives a remittance amount from the terminal (sep S40), and makes a comparison between the received amount and the account balance (step S41).

If the remittance amount is equal to or smaller than the account balance, the financial processing device freezes or pays money of the remittance amount (step S42), and transmits OK notification to the terminal (step S44 of Fig. 15). When the money is frozen, only the remittance amount of the fund in that account is handled not to be withdrawable. When the money is paid, the remittance amount is subtracted from the account.

Next, the financial processing device determines whether or not a request to generate a temporary remittance account as a tentative account for financial institution management has been issued (step S45). If the financial processing device determines that this request has been issued, it generates a temporary remittance account as a tentative account (step S46). If the financial processing device determines that this request has not been issued, it generates a temporary remittance account as a related record of the remittance source account (step s47). The number of the tentative account is automatically generated, for example, with a hash method.

Then, the financial processing device sets the remittance amount in the record of the generated temporary remittance account (step S48). The financial processing device further receives the remitter name, confidential information, identity information of the remittee, etc. from the terminal (step S49), sets the received information in the record of the temporary remittance account (step S50), and terminates the process.

If the remittance method is a cash transfer in step S32 of Fig. 14, the financial processing device receives the amount of cash put into the terminal as a remittance amount (step S43), and performs the operations in and after step S46 of Fig. 15. If the checking result is determined to be improper in step S35 of Fig. 14, and if the remittance amount is larger than the account balance in step S41, the financial processing device transmits an error message to the terminal (step S51), and terminates the process. If the request to generate confidential information has not been issued in step S37 of Fig. 14, the financial processing device performs the operations in and after step S40.

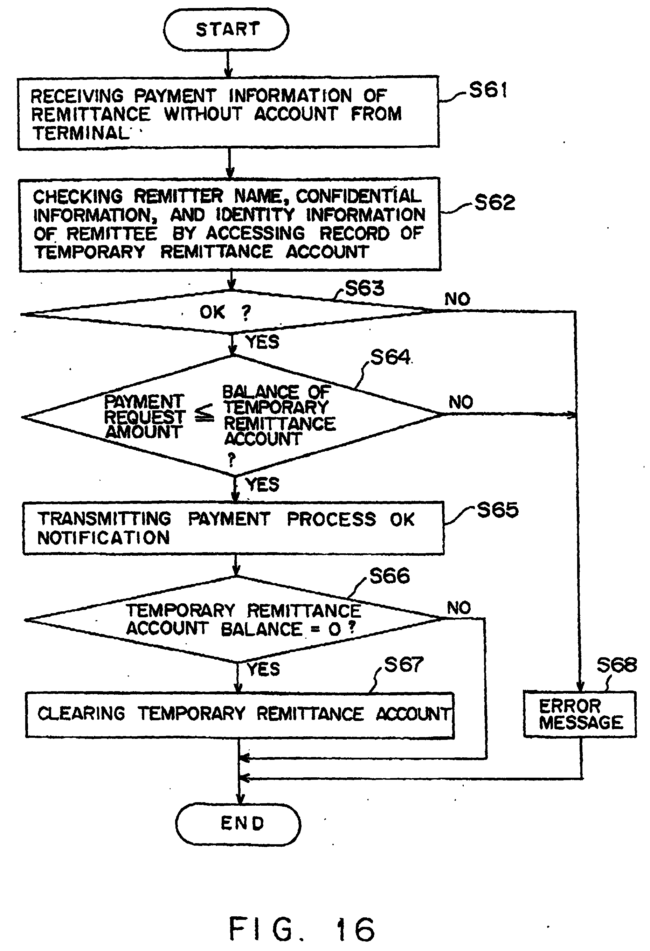

Fig. 16 is a flowchart showing the process performed by the financial processing device upon receipt of a payment request from the terminal. Once the process is started, the financial processing device receives payment information of a remittance without an account from the terminal (step S61). The payment information includes a remitter name, confidential information, and identity information of a remittee. Next, the financial processing device accesses the record of the temporary remittance account, checks the remitter name, the confidential information, and the identity information of the remittee (step S62), and determines whether or not the checked information match the received information (step S63).

If the received information and the information of the temporary remittance account match, the financial processing device makes a comparison between the requested payment amount and the balance of the temporary remittance account (step S64). If the requested account is equal to or smaller than the account balance, the financial processing device transmits OK notification permitting a payment process to the terminal (step S65), and determines whether or not the account balance after the payment becomes zero. If the financial processing device determines that the balance becomes zero, it clears the record of the temporary remittance account (step S67) and terminates the process. If the financial processing device determines that the balance does not became zero, it terminates the process while leaving the temporary remittance account. If the received information and the information of the temporary remittance account mismatch in step S63, and if the requested amount is larger than the account balance in step S64, the financial processing device transmits an error message to the terminal (step S68) and terminates the process.

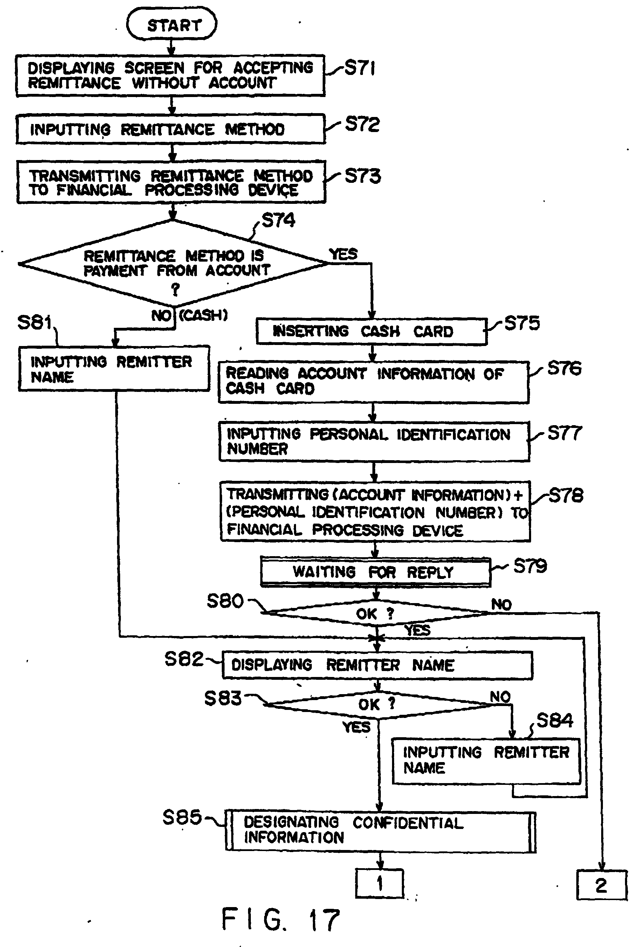

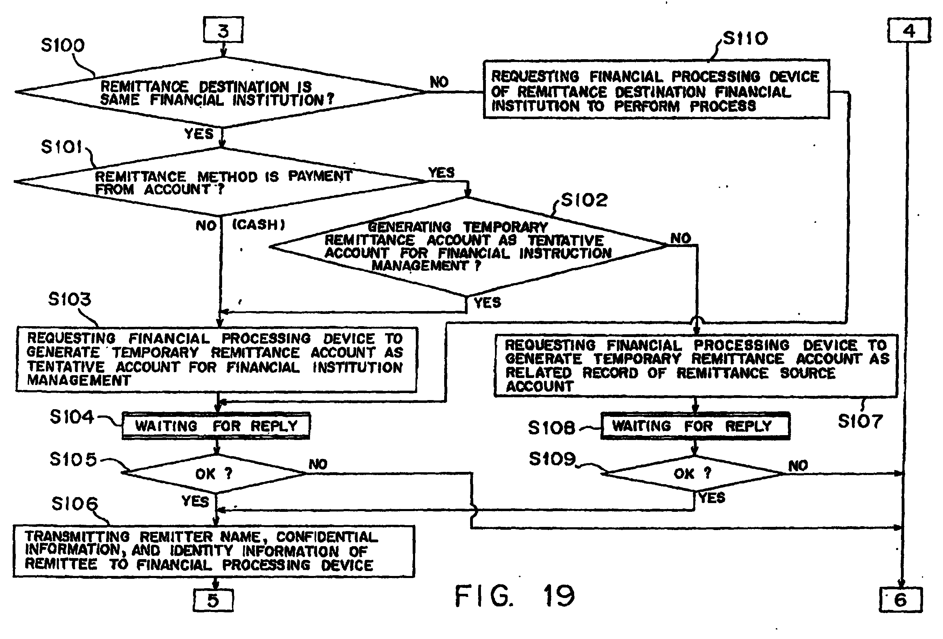

Next, further details of the process performed by the terminal are described by referring to Figs. 17 through 23. Figs. 17 through 20 are flowcharts showing the process performed by the terminal when issuing a remittance request to the financial processing device. Once the process is started, the terminal first displays the screen for accepting a remittance without an account (step S71). When a remitter inputs a remittance method (step S72), the terminal transmits the input method to the financial processing device (step S73). Then, the terminal determines whether or not the remittance method is payment from an account (step S74).

If the terminal determines that the remittance method is payment from an account, the remitter inserts his or her cash card (step S75). The terminal then reads the account information of the cash card (step S76). When the remitter inputs his or her personal identification number (step S77), the terminal transmits the account information and the personal identification number to the financial processing device (step S78) end waits for a reply (step S79).

When a reply is transmitted from the financial processing device, the terminal determines whether or not the notified process result is OK (step S80). If the process result is OK, the terminal displays the remitter name included in the reply (step S82), and inquires of the remitter about whether or not to authenticate the remitter name (step S83). If the remitter inputs his or her name without authenticating the displayed remitter name (step S84), the terminal repeats the operations in and after step S82.

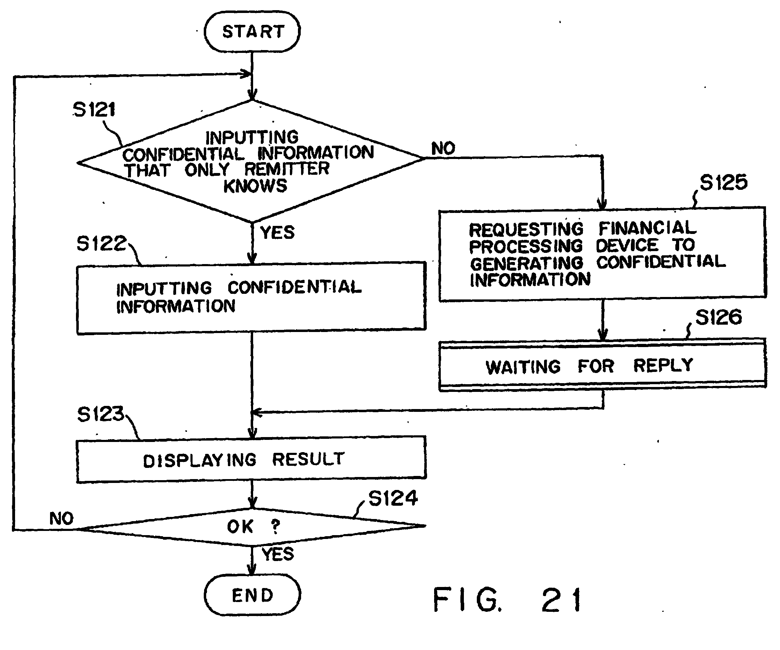

When the displayed remitter name is authenticated, the terminal performs a confidential information designation process shown in Fig. 21 (step S85). In this process, the terminal inquires of the remitter about whether or not he or she inputs confidential information that only the remitter knows (step S121).

When the remitter inputs confidential information (step S122), the terminal displays the input information (step S123), and inquires of the remitter about whether or not to authenticate the displayed information (step S124). If the remitter does not authenticate the displayed information, the terminal performs the operations in and after step S121. If the remitter authenticates the displayed information, the terminal terminates the process.

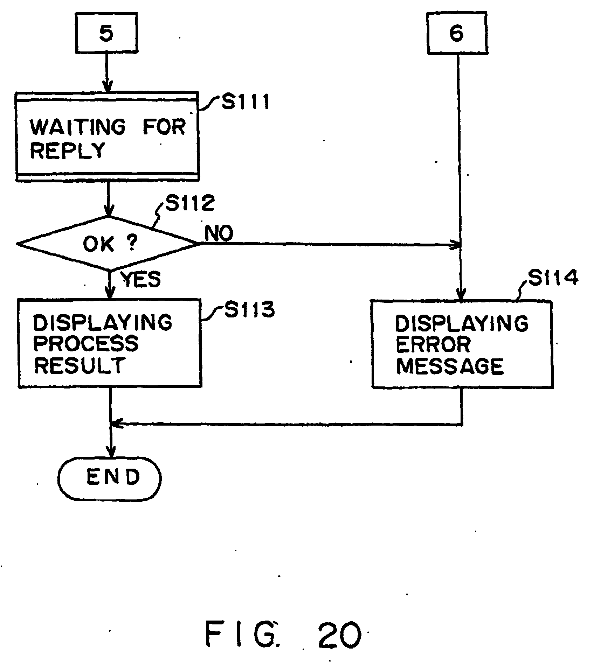

If the remitter does not input confidential information in step S121, the terminal requests the financial processing device to automatically generate confidential information (step S125), and waits for a reply (step S126). When generated confidential information is returned, the terminal performs the operations in and after step S123. In this way, confidential information used for a remittance is designated. If the remittance method is a cash transfer in step S74 of Fig. 17, the remitter directly inputs his or her name. Then, the terminal performs the operations in and after step S82. If the result of the process is not OK in step S80, the terminal displays an error message (step S114 of Fig. 20), and terminates the process.

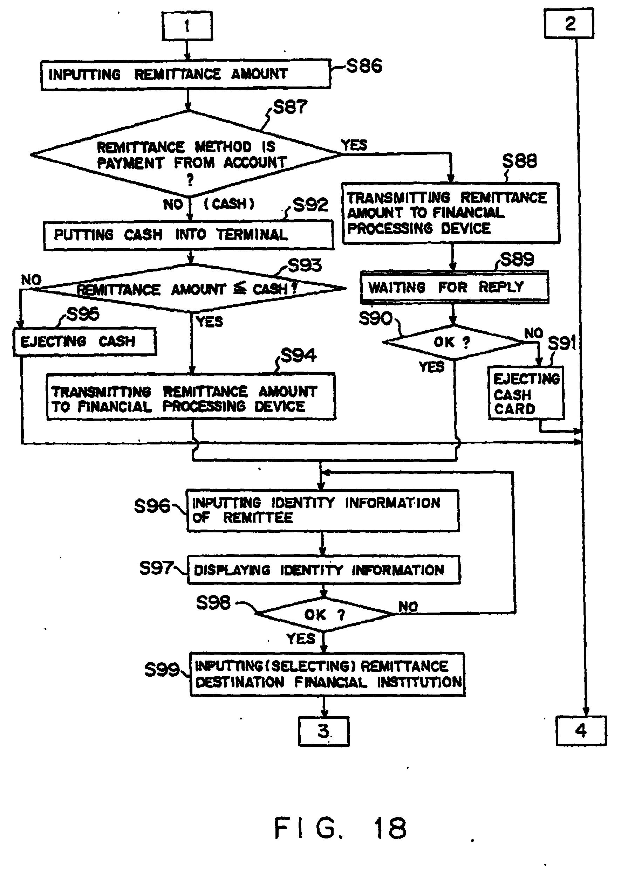

Next, when the remitter inputs a remittance amount (step S86 of Fig. 18), the terminal again determines whether or not the remittance method is payment from an account (step S87). If the remittance method is payment from an account, the terminal transmits the remittance amount to the financial processing device (step S88) and waits for a reply (step S89). If the returned result of the process is OK, the terminal performs the operations in and after step S96. If the returned result of the process is not OK, the terminal ejects the cash card (step S91), displays an error message (step S114 of Fig. 20), and terminates the process.

If the remittance method is a cash transfer in step S87, the remitter puts cash into the terminal (step S92). Then, the terminal makes a comparison between the put cash and the remittance amount (step S93). If the put cash is equal to or more than the remittance amount, the terminal transmits the remittance amount to the financial processing device (step S94), and performs the operations in end after step S96. If the cash is less than the remittance amount, the terminal ejects the cash (step S95), displays an error message (step S114 of Fig. 20), and terminates the process.

When the remitter inputs the identity information of a remittee (step S96), the terminal displays the input information (step S97), and inquires of the remitter about whether or not to authenticate the displayed identity information of the remittee (step S98). If the remitter does not authenticate the displayed information, the terminal repeats the operations in and after step S96. If the remitter authenticates the displayed information and inputs (or selects) the name or the identification code of the remittance destination financial institution, the terminal determines whether or not the specified remittance destination is the same institution as that including the financial processing device currently providing a service.

If they are the same, the terminal again determines whether or not the remittance method is payment from an account (step S101). If the remittance method is payment from an account, the terminal inquires of the remitter about whether or not to generate a temporary remittance account as a tentative account for financial institution management (step S102).

If the temporary remittance account is generated as a tentative account, the terminal requests the financial processing device to generate a tentative account record (step S103) and waits for a reply (step S104). Then, the terminal, determines whether or not a returned result of the process is OK (step S105).

If a tentative account is not generated in step S102, the terminal requests the financial processing device to generate a related record of the remittance source account (step S107), and waits for a reply (step S108). The terminal then determines whether or not a returned result of the process is OK (step S109).

If the remittance destination is a different financial institution in step S100, the terminal requests the financial processing device of the remittance destination financial institution to generate a tentative account (step S110), and performs the operations in and after step S104. If the remittance method is a cash transfer in step S101, the terminal performs the operations in and after step S103.

If the result of the process is not OK in steps S105 and S109, the terminal displays an error message (step S114 of Fig. 20), and terminates the process. If the result of the process is OK, the terminal transmits the remitter name, confidential information, and identity information of the remittee to the financial processing device (step S106), and waits for a reply (step S111 of Fig. 20). Then, the terminal determines whether or not a returned result of the process is OK (step S112).

If the returned result of the process is OK, the terminal displays that result (step S113) and terminates the process. If the returned result of the process is not OK, the terminal displays an error message (step S114) and terminates the process.

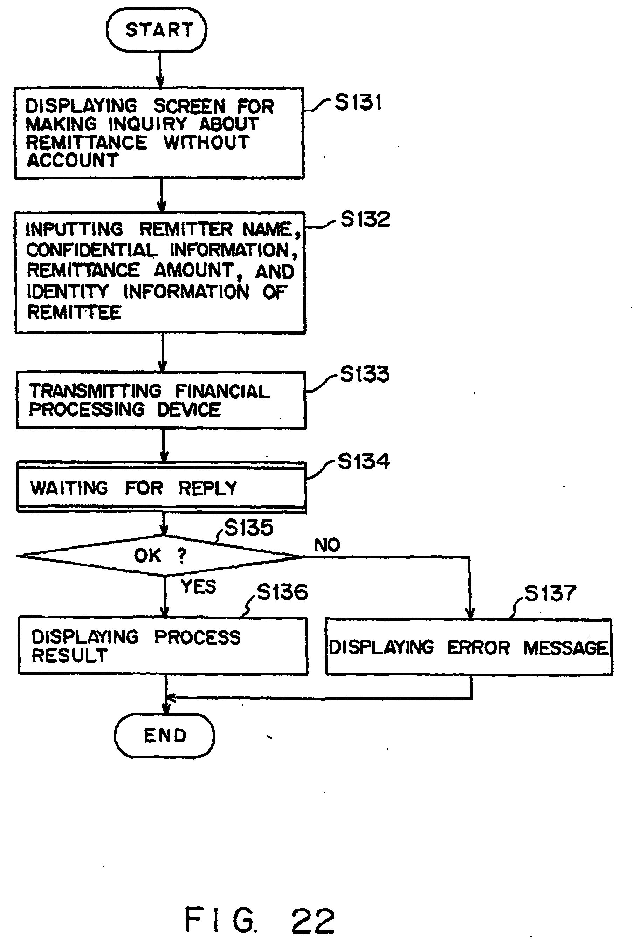

Fig. 22 is a flowchart showing the process performed by the terminal when a remitter or a remittee makes an inquiry about a result of the remittance process. Once the process is started, the terminal displays the screen for making an inquiry about a remittance without an account (step S131). A person who makes an inquiry inputs a remitter name, confidential information, a remittance amount, and identity information of a remittee as inquiry information (step S132).

Next, the terminal transmits the input information to the financial processing device (step S133), and waits for a reply (step S134). The terminal then determines whether or not a returned result of the process is OK (step S135). If the returned result of the process is OK, the terminal displays the result of the remittance process (step S136) and terminates the process. If the returned result of the process is not OK, the terminal displays an error message (step S137) and terminates the process.

With such an inquiry process, a remittee can examine whether or not a remittance made to the remittee himself exists, and a remitter verifies whether or not the remittance has been withdrawn.

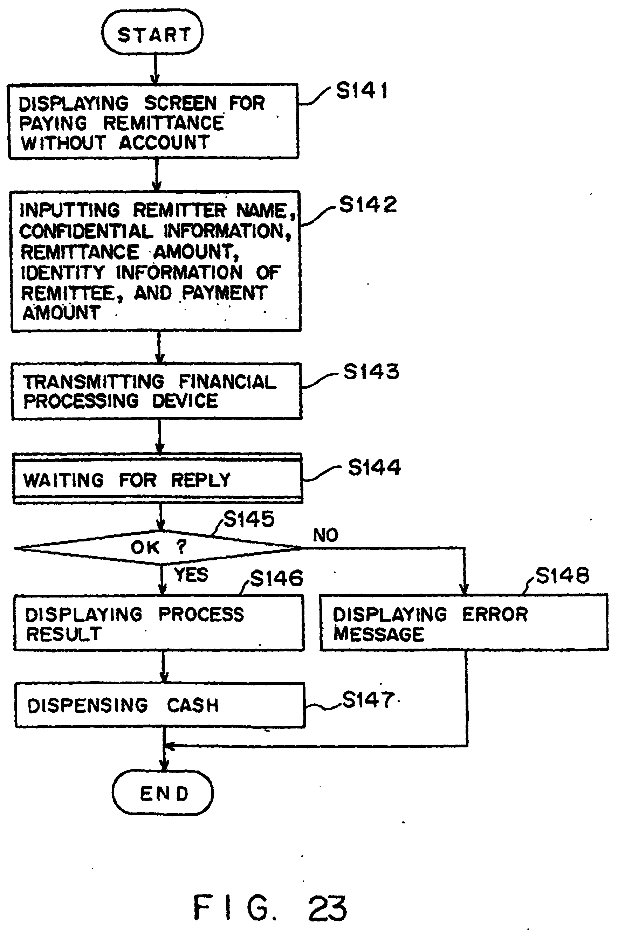

Fig. 23 is a flowchart showing the process performed by the terminal when a remittee withdraws a remittance. Once the process is started, the terminal displays the screen for paying a remittance without an account (step S141). The remittee inputs a remitter name, confidential information, a remittance amount, and the identity information of the remittee himself as confirmation information, and further inputs a desired payment amount (step S142).

Next, the terminal transmits the input information to the financial processing device (step S143), and waits for a reply (step S144). The terminal then determines whether or not a returned result of the process is OK (step S145). If the returned result of the process is OK, the terminal displays that result (step S146), dispenses cash (step S147), and terminates the process. If the result of the returned process is not OK, the terminal displays an error message (step S148) and terminates the process.

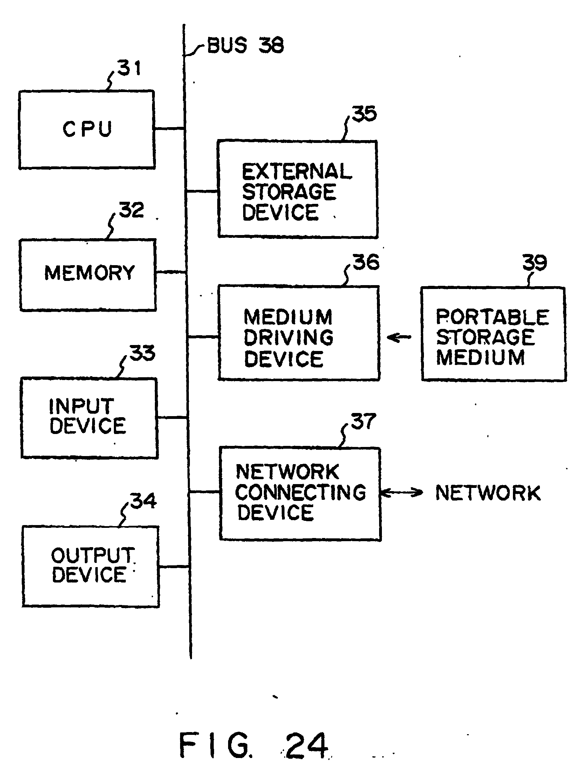

As the financial processing device or the terminal in this preferred embodiment, for example, an information processing device (computer) shown in Fig. 24 is used. The information processing device shown in Fig. 24 comprises a CPU 31, a memory 32, an input device 33, an output device 34, an external storage device 35, a medium driving device 36, and a network connecting device 37, which are interconnected by a bus 38.

The memory 32 stores programs and data, which are used for processes. As the memory 32, for example, a ROM (Read Only Memory), a RAM (Random Access Memory), etc. are used. The CPU 31 performs the above described processes of the financial processing device and the terminal by executing the programs with the memory 32.

The input device 33 is, for example, a keyboard, a pointing device, a touch panel, etc., and is used to input necessary instructions and information. The output device 34 is, for example, a display, a printer, etc., and outputs process results or inquiries to a user.

The external storage device 35 is, for example, a magnetic disk device, an optical disk device, a magneto-optical disk device, etc. The above described programs and data may be stored in the external storage device 35, and used by being loaded into the memory 32 on demand.

The medium driving device 36 drives a portable storage medium 39, and accesses its stored contents. As the portable storage medium 39, an arbitrary computer-readable storage medium such as a memory card, a floppy disk, a CD-ROM (Compact Disk-Reed Only Memory), an optical disk, a magneto-optical disk, etc., is used. The above described programs end data may be stored onto the portable storage medium 39, and used by being loaded into the memory 32 on demand.

The network connecting device 37 communicates with an external device via an arbitrary network line) such as a LAN (Local Area Network), etc. With this device 37, the above described programs and data may be received also from an external device, and used by being loaded into the memory 32 on demand.

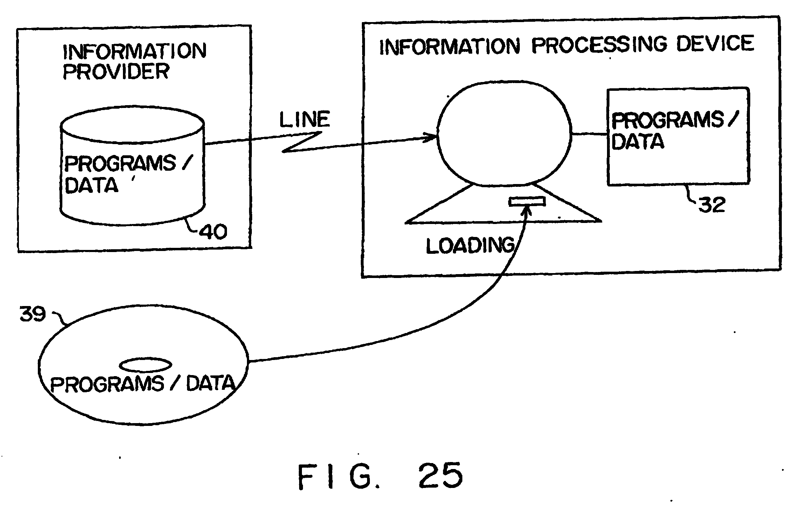

Fig. 25 shows computer-readable storage media which can provide the programs and data to the information processing device shown in Fig. 24. The programs and data stored in the portable storage medium 39 or in an external database 40 are loaded into the memory 32. The CPU 31 executes the programs with the data, and performs necessary processes.

Furthermore, the external storage device 35 shown in Fig. 24 or the database 40 shown in Fig. 25 is used, for example, as the customer management database 14 or the tentative account management database 15, which is shown in Fig. 2.

The above described preferred embodiment assumes that a remittee doss not have an account in a financial institution. However, a similar service may be used also if a remittee has an account. For example, if a remittee does not possess a cash card while on a trip, a remittance without an account according to the present invention is a convenience. Furthermore, a remittance can be made not only domestically but also abroad.

### Industrial Applicability

According to the present invention, a cash remittance can be made even if both the remittance source and destination do not have their accounts, end also a remittance by payment from an account can be made even if a remittance destination does not have an account. Accordingly, a remitter can easily send money to anybody at any time.

Additionally, not only identity information of a remittee but also confidential information such as a password, etc., which only a remitter and a remittee know, are used to confirm the identity of the remittee, so that an illegal withdrawal can be prevented and the safety of a remittance can be secured.

Furthermore, the remitter can utilize the most convenient financial institution from the standpoint of a remitter by considering the interest rate, fees, location, etc., and also a remittee can utilize the most convenient financial institution from the standpoint of a remittee, whereby the convenience of a remittance service can be improved.

Still further, the remittee can withdraw cash without using a bankbook or a cash card, whereby an accident such as loss or theft of a cash card, etc., cannot occur.

## Claims

1. A remittance system transferring money information by using a financial institution that manages an account having the money information, comprising:
generating means (1, 19) for generating temporary remittance account information including remittance information, which includes a remittance amount, end identity information identifying a remittance destination, when the remittance information is specified by a remittance source;
storing means (2, 14, 15) for storing the temporary remittance account information; and
processing means (3, 20) for reading the identity information from said storing means, making a comparison between the read information and identity information specified by the remittance destination, and performing a payment process for paying money to the remittance destination based on a result of the comparison.

2. The remittance system according to claim 1, wherein
said generating means generates related information (23) linked to information of a remittance source account as the temporary remittance account information.

3. The remittance system according to claim 1, wherein
said generating means generates tentative account information (21) managed by a financial institution as the temporary remittance account information apart from information of a remittance source account.

4. The remittance system according to claim 1, wherein:
said generating means adds confidential information that the remittance source knows to the temporary remittance account information; and
said processing means reads the confidential information from said storing means, makes a comparison between the read information and confidential information specified by the remittance destination, and performs the payment process based on a result of the comparison.

5. The remittance system according to claim 1, wherein
said generating means adds information of a time limit to the temporary remittance account information.

6. The remittance system according to claim 5, wherein
if the payment process is not performed before the time limit, said generating means clears the temporary remittance account information and returns the remittance amount to a remittance source account.

7. A financial processing device (13), which is arranged in a financial institution, comprising:
receiving means (4, 16) for receiving remittance information including a remittance amount:
generating means (1, 19) for generating temporary remittance account information including the remittance information and identity information identifying a remittance destination; and
storing means (2, 14, 15) for storing the temporary remittance account information so that money within the remittance amount can be paid in response to a request from the remittance destination.

8. The financial processing device according to claim 7, wherein:
the financial institution manages a remittance source account; and
said generating means generates related information (23) linked to information of the remittance source account as the temporary remittance account information.

9. The financial processing device according to claim 7, wherein
said generating means generates tentative account information (21) managed by the financial institution as the temporary remittance account information apart from information of a remittance source account.

10. The financial processing device according to claim 9, wherein
said generating means adds to the tentative account information information (26) of a remittance source financial institution that manages the remittance source account.

11. The remittance system according to claim 7, wherein
said generating means adds information of a time limit to the temporary remittance account information.

12. A financial processing device (13) arranged in a financial institution, comprising:
storing means (2, 14, 15) for storing temporary remittance account information which is generated at the time of a remittance, and includes balance information of remitted money and identity information identifying a remittance destination;
receiving means (5, 16) for receiving payment information including a payment amount from a remittance account corresponding to the temporary remittance account information, and identity information specified by the remittance destination; and
processing means (3, 20) for reading the identity information from said storing means, making a comparison between the read information and identity information specified by the remittance destination, and performing a payment process for paying money by the payment amount to the remittance destination based on a result of the comparison.

13. The financial processing device according to claim 12, wherein
said processing means rejects payment if the payment amount is larger than a balance when said processing means reads the balance information from said storing means and makes a comparison between the read information and the payment amount.

14. The financial processing device according to claim 12, further comprising
clearing means (20) for clearing the temporary remittance account when no balance of the temporary remittance account is left.

15. A terminal (11, 24) connected to a financial institution, comprising:
inputting means (33) for inputting remittance information including a remittance amount, and identity information identifying a remittance destination:
transmitting means (37) for transmitting the remittance information and the identity information to the financial institution; and
requesting means (31, 32, 37) for requesting the financial institution to manage remitted money by generating temporary remittance account information including the remittance information and the identity information, and to pay money within the remittance amount in response to a request from the remittance destination.

16. The terminal according to claim 15, wherein:
said inputting means inputs confidential information that a remittance source knows; and
said requesting means requests the financial institution to manage the remitted money by adding the confidential information to the temporary remittance account information.

17. A terminal (11, 24) connected to a financial institution, comprising:
inputting means (33) for inputting identity information identifying a remittance destination;
transmitting means (37) for transmitting the identity information to the financial institution;
inquiring means (31, 32, 37) for inquiring of the financial institution about temporary remittance account information that includes the identity information and is generated at the time of a remittance; and
displaying means (34) for displaying a result of an inquiry transmitted from the financial institution.

18. A terminal (12) connected to a financial institution, comprising:
inputting means (33) for inputting payment information including a payment amount from a remittance account corresponding to temporary remittance account information that includes balance information of remitted money and identity information identifying a remittance destination and is generated at the time of a remittance, and identity information specified by the remittance destination;
transmitting means (37) for transmitting the payment information to the financial institution;
requesting means (31, 32, 37) for requesting the financial institution to pay money by the payment amount based on a result of a comparison made between the identity information within the temporary remittance account information and the identity information specified by the remittance destination; and
displaying means (34) for displaying a process result transmitted from the financial institution.

19. A computer-readable storage medium (32, 35, 39, 40) on which is recorded a program for causing a computer (13) that is arranged in a financial institution to execute a process, said process comprising;
receiving remittance information including a remittance amount;
generating temporary remittance account information including the remittance information and identity information identifying a remittance destination; and
storing the temporary remittance account information so that money within the remittance amount can be paid in response to a request from the remittance destination.

20. A computer-readable storage medium (32, 35, 39, 40) on which is recorded a program for causing a computer (13) that is arranged in a financial institution to execute a process, said process comprising:
storing temporary remittance account information which includes balance information of remitted money and identity information identifying a remittance destination and is generated at the time of a remittance;
receiving payment information which includes a payment amount from a remittance account corresponding to the temporary remittance account information, and identity information specified by the remittance destination; and
reading the identity information within the temporary remittance account information, making a comparison between the read information and the information specified by the remittance destination, and performing a payment process for paying money by the payment amount to the remittance destination based on a result of the comparison.

21. A computer-readable storage medium (32, 35, 39, 40) on which is recorded a program for causing a computer (13) that is arranged in a financial institution to execute a process, said process comprising:
storing temporary remittance account information including a remittance amount and a time limit;
monitoring whether or not a payment process is performed by a remittance destination before the time limit; and
clearing the temporary remittance account information, and returning the remittance amount to a remittance source account, if the payment process is not performed before the time limit.

22. A computer-readable storage medium (32, 35, 39, 40) on which is recorded a program for causing a computer (11, 24) that is connected to a financial institution to execute a process, said process comprising:
inputting remittance information including a remittance amount, and identity information identifying a remittance destination;
transmitting the remittance information and the identity information to the financial institution; and
requesting the financial institution to manage remitted money by generating temporary remittance account information including the remittance information and the identity information, and to pay money within the remittance amount in response to a request from the remittance destination.

23. A computer-readable storage medium (32, 35, 39, 40) on which is recorded a program for causing a computer (11, 24) that is connected to a financial institution to execute a process, said process comprising:
inputting identity information identifying a remittance destination;
transmitting the identity information to the financial institution;
inquiring of the financial institution about temporary remittance account information which includes the identity information and is generated at the time of a remittance; and
displaying an inquiry result transmitted from the financial institution.

24. A computer-readable storage medium (32, 35, 39, 40) on which is recorded a program for causing a computer (12) that is connected to a financial institution to execute a process, said process comprising:
inputting payment information including a payment amount from a remittance account corresponding to temporary remittance account information which includes balance information of remitted money and identity information identifying a remittance destination and is generated at the time of a remittance, and identity information specified by the remittance destination;
transmitting the payment information to the financial institution;
requesting the financial institution to pay money by the payment amount based on a result of the comparison between the identity information within the temporary remittance account information and the identity information specified by the remittance destination; and
displaying a process result transmitted from the financial institution.

25. A remittance method transferring money information by using a financial institution that manages an account having the money information, comprising:
specifying remittance information including a remittance amount by using a computer (13);
generating temporary remittance account information including the remittance information end identity information identifying a remittance destination by using the computer;
storing the temporary remittance account information in the computer;
reading the identity information from the computer, and making a comparison between the read information and identity information specified by the remittance destination; and
performing a payment process for paying money to the remittance destination based on a result of the comparison by using the computer.
